# DEMANDE DE BREVET EUROPEEN

(11) **EP 0 883 051 A1**
(43) Date de publication de la demande: **09.12.1998**
(21) Numéro de dépôt: 98410063.6
(22) Date de dépôt: 03.06.1998
(51) Int. Cl.: G05F 1/575, G06F 1/26, H02M 3/156

(54) **Système de fourniture d'une tension régulée**

(30) Priorité: 04.06.1997 FR 9707131
(71) Demandeur: SGS-THOMSON MICROELECTRONICS S.A., 94250 Gentilly (FR)
(72) Inventeur: Ravon, Jean-Michel, 13710 Fuveau (FR)
(74) Mandataire: de Beaumont, Michel

(57) **Abrégé**

L'invention concerne un système de fourniture d'une tension régulée (Vout) destinée à alimenter une charge (2), comportant une source (11) propre à fournir un courant (I) sensiblement constant correspondant approximativement au courant maximal susceptible d'être appelé par la charge, et un dispositif (10) recevant ledit courant constant et régulant la tension (Vout) d'alimentation de la charge, au moins un condensateur (C') étant connecté entre une borne (S) de sortie du dispositif de régulation et la masse.

## Description

La présente invention concerne le domaine des convertisseurs de puissance, tels que les systèmes d'alimentation à découpage ou les régulateurs linéaires destinés à alimenter une charge sous une tension régulière fixée. De tels convertisseurs reçoivent une tension continue provenant d'une batterie ou d'un pont redresseur de la tension alternative du secteur associé à un condensateur de stockage. L'invention s'applique plus particulièrement au maintien de la tension d'alimentation de la charge même en cas de brusque variation du courant dans celle-ci. Par exemple, l'invention s'applique aux convertisseurs de puissance destinés à alimenter un microprocesseur dont l'appel de courant peut varier, à une fréquence de récurrence relativement importante (de l'ordre de quelques hertz à plusieurs kilohertz), entre quelques mA et 10 ou 15 A, voire plus.

L'augmentation de performance des microprocesseurs nécessite des convertisseurs de puissance de plus en plus performants du point de vue de leur stabilité en tension et de leur rapidité à répondre à une variation de la charge. Par exemple, un convertisseur destiné à alimenter un microprocesseur connu sous la dénomination commerciale "PENTIUM-PRO" de la marque "Intel" doit supporter une variation de courant de 0,3 A à 10 A en 350 nanosecondes avec une précision en tension de ±5 %.

Plusieurs solutions classiques sont utilisées pour améliorer la réponse du convertisseur à ces variations brusques de courant.

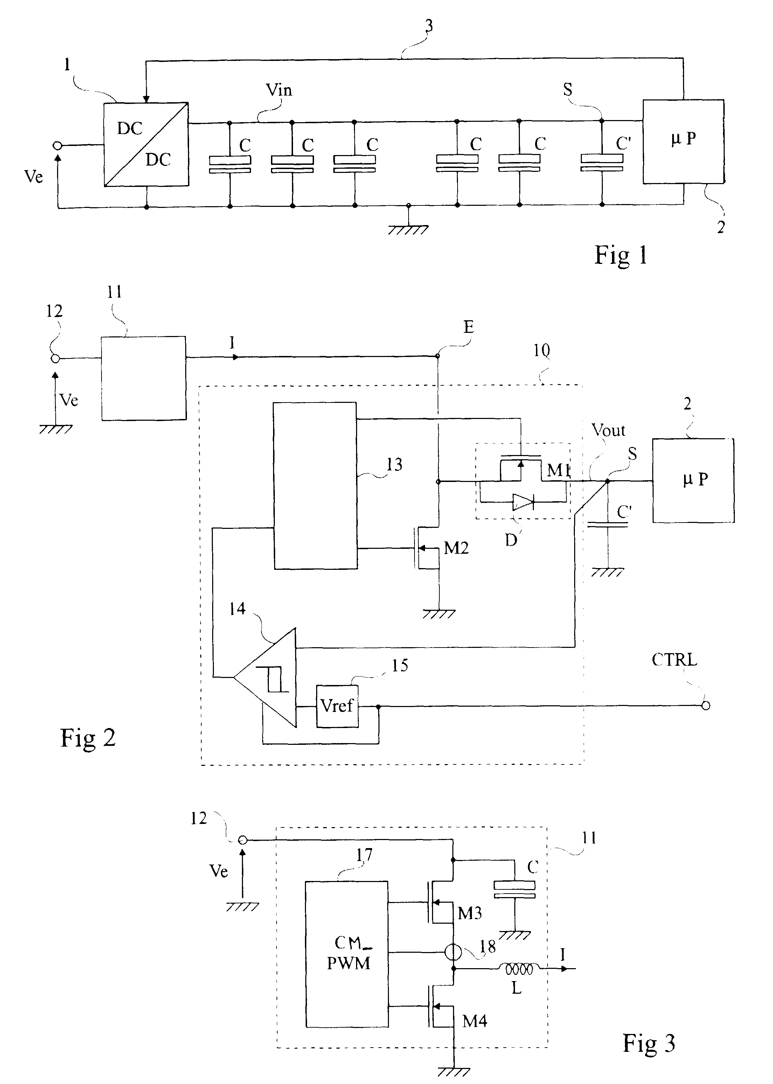

La figure 1 représente un exemple de schéma classique destiné à alimenter un microprocesseur. Un convertisseur DC/DC 1 reçoit une tension d'alimentation Ve, par exemple de +12 volts ou +5 volts et délivre une tension Vin à un microprocesseur 2. La valeur de la tension Vin (par exemple, +2,1 à +3,5 volts) est généralement fixée par le microprocesseur 2 qui communique avec le convertisseur 1 par une liaison numérique 3. Plusieurs condensateurs chimiques C de stockage sont connectés en parallèle entre la ligne d'alimentation Vin et la masse pour limiter les variations transitoires de la tension Vin suite à une variation du courant appelé par le microprocesseur 2. Un ou plusieurs condensateurs en céramique C' de découplage sont généralement reliés entre une borne S d'alimentation du microprocesseur recevant la tension Vin et la masse.

Un inconvénient de cette solution est que des condensateurs de fortes capacités, qui doivent de plus présenter de très faibles résistance et inductance séries équivalentes, sont très coûteux. Une solution classique telle que représentée à la figure 1 nécessite typiquement, pour l'exemple ci-dessus d'un microprocesseur "PENTIUM-PRO", dix condensateurs chimiques de 1500 µF ayant chacun une résistance série équivalente de 44 mΩ, pour atteindre une capacité supérieure à 4000 µF avec une résistance série équivalente inférieure à 5 mΩ correspondant aux contraintes fixées par le fabricant. En outre, l'inductance série équivalente d'un condensateur est généralement de 10nH.

Une autre solution, applicable si le convertisseur de puissance est une alimentation à découpage (PWM), est de faire fonctionner l'alimentation à découpage à des fréquences de commutation élevées. Si une telle solution requiert des condensateurs chimiques de capacité plus faible entre le convertisseur et le microprocesseur, leurs inductance et résistance séries équivalentes restent critiques du point de vue du coût. De plus, la conception d'une alimentation à découpage fonctionnant à 500 kHz, voire plus, requiert l'emploi de composants très performants, en particulier, pour stabiliser la boucle de réaction en tenant compte du comportement des composants et du tracé du circuit imprimé à une fréquence aussi élevée.

La présente invention vise à proposer une nouvelle solution pour limiter l'excursion de la tension d'alimentation d'un microprocesseur suite à une brusque variation du courant appelé par ce microprocesseur.

Plus généralement, l'invention vise à proposer un dispositif de limitation des variations transitoires de la tension d'alimentation d'une charge dont le courant est susceptible de subir de brusques variations, à partir d'un convertisseur de puissance.

La présente invention vise également à minimiser la dissipation d'énergie de ce dispositif de limitation.

Pour atteindre ces objets, la présente invention prévoit un système de fourniture d'une tension régulée destinée à alimenter une charge, comportant :
une source propre à fournir un courant sensiblement constant correspondant approximativement au courant maximal susceptible d'être appelé par la charge ; et
un dispositif de régulation recevant, sur une borne d'entrée, ledit courant constant et délivrant, sur une borne de sortie, la tension régulée d'alimentation de la charge, au moins un condensateur étant connecté entre la borne de sortie et la masse, et le dispositif de régulation comportant un comparateur à hystérésis recevant la tension d'alimentation de la charge et une tension de référence.

Selon un mode de réalisation de la présente invention, le dispositif de régulation comporte au moins un premier transistor MOS, connecté entre la borne d'entrée et la masse, le premier transistor étant commandé par le comparateur en étant polarisé dans la portion linéaire de sa caractéristique courant-tension.

Selon un mode de réalisation de la présente invention, le dispositif de régulation comporte une diode SCHOTTKY reliant la borne d'entrée à la borne de sortie.

Selon un mode de réalisation de la présente invention, le dispositif de régulation comporte un deuxième transistor MOS dont la source est reliée à la borne d'entrée et dont le drain est relié à la borne de sortie, ledit deuxième transistor étant commandé, à partir du comparateur à hystérésis, par un circuit introduisant un retard à la fermeture du deuxième transistor.

Selon un mode de réalisation de la présente invention, la source de courant constant est constituée d'une alimentation à découpage commandée en courant, un troisième transistor MOS, connecté entre la masse et une première borne d'une inductance dont une deuxième borne délivre le courant constant, étant commandé dans la portion linéaire de sa caractéristique courant-tension.

Selon un mode de réalisation de la présente invention, la source de courant constant est constituée d'un régulateur de courant linéaire.

Selon un mode de réalisation de la présente invention, ledit condensateur est un condensateur céramique.

La présente invention concerne également un dispositif de limitation de variations transitoires d'une tension fournie à partir d'un convertisseur de puissance constituant ladite source de courant, comportant :
un premier transistor MOS de puissance connecté entre la borne d'entrée et la masse ;
un élément de conduction unidirectionnelle connecté entre la borne d'entrée et la borne de sortie ; et
des moyens de détection de la tension régulée délivrée et de commande du premier transistor dans la portion linéaire de sa caractéristique courant-tension.

Selon un mode de réalisation de la présente invention, ledit élément de conduction unidirectionnelle est constitué d'un deuxième transistor MOS dont la source est connectée à la borne d'entrée et dont le drain est connecté à la borne de sortie.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment est destinée à exposer l'état de la technique et le problème posé ;
la figure 2 représente schématiquement un mode de réalisation d'un dispositif selon l'invention, associé à un convertisseur de puissance et à un microprocesseur ;
la figure 3 représente un mode de réalisation d'une source de courant constant du dispositif représenté à la figure 2 ; et
la figure 4 représente un détail d'un deuxième mode de réalisation d'un dispositif selon la présente invention.

Les mêmes éléments ont été désignés par les mêmes références aux différentes figures. Pour des raisons de clarté, seuls les éléments nécessaires à la compréhension de l'invention ont été représentés aux figures et seront décrits par la suite.

La figure 2 représente, de façon schématique, un premier mode de réalisation d'un dispositif 10 selon la présente invention, de limitation des variations transitoires d'une tension Vout d'alimentation d'une charge 2, par exemple un microprocesseur (µP). Le dispositif 10 est, selon l'invention, destiné à recevoir sur une borne E d'entrée, un courant I sensiblement constant, et à délivrer la tension Vout régulée sur une borne S d'alimentation du microprocesseur 2. Le courant constant I est fourni par une source 11 de courant alimentée par une tension continue Ve, par exemple +5 volts, fournie sur une borne 12. La tension Ve peut provenir d'une alimentation alternative redressée et filtrée.

Une caractéristique de la présente invention est de dissocier la fourniture du courant d'alimentation, de la régulation de la tension de sortie. Ainsi, selon la présente invention, la source 11 est destinée à générer le courant I avec une valeur au moins égale au courant maximum qu'est susceptible de consommer la charge 2, et le dispositif 10 contrôle la tension de sortie Vout pour la maintenir à une valeur donnée (par exemple, entre 2,1 volts et 3,5 volts), fixée par un signal de commande envoyé par la charge 2 sur une borne CTRL de commande du dispositif 10.

Un ou plusieurs condensateurs céramiques C' de découplage sont, de façon classique, placés en parallèle entre la borne S et la masse. Selon l'invention, la tension Vout est en permanence délivrée par le condensateur C'.

Selon le premier mode de réalisation de l'invention, le dispositif 10 de régulation comporte un transistor MOS de puissance M1, ici à canal N, reliant les bornes E et S. La source du transistor M1 est reliée à la borne E et son drain est relié à la borne S. A la figure 2, le transistor M1 a été représenté en faisant figurer sa diode intrinsèque D entre source et drain.

Selon l'invention, la borne E est reliée à la masse par l'intermédiaire d'un transistor MOS M2, ici à canal N, dont la source est reliée à la masse et dont le drain est connecté à la borne E. Le rôle du transistor M2 est d'absorber l'excès de courant I pendant les périodes où la charge ne requiert qu'un faible courant d'alimentation.

Les grilles respectives des transistors M1 et M2 sont reliées à des bornes de sortie d'un circuit 13 de commande. Le circuit 13, dont le détail constitutif n'est pas représenté, est essentiellement constitué d'amplificateurs de commande, associés à des moyens de décalage de niveaux pour polariser convenablement les grilles de transistors M1 et M2, et à des moyens de temporisation pour retarder la fermeture du transistor M1 comme on le verra par la suite.

Le circuit 13 est commandé par un comparateur 14 dont une première borne d'entrée est reliée à la borne S pour détecter la tension Vout et dont une deuxième borne d'entrée reçoit une tension de référence Vref fournie par un bloc 15 dont une entrée de commande est reliée à la borne CTRL. Le comparateur 14 est un comparateur à hystérésis programmable dont le rôle est d'assurer la régulation de la tension Vout aux bornes du condensateur C'. La valeur moyenne de cette tension est ajustée par la borne CTRL de commande, par exemple, entre 2,1 volts et 3,5 volts. L'amplitude de l'hystérésis est également ajustée par le signal de commande présent sur la borne CTRL afin de respecter la tolérance relative de la tension Vout (généralement ±5%). Cette tolérance relative est utilisée pour définir l'excursion de tension de sortie due au comparateur 14 à hystérésis en tenant compte de la précision du circuit de référence de tension 15 (généralement 1 %), et des temps de réponse du comparateur 14 et du circuit 13.

Une caractéristique de la présente invention est que, quand il doit être passant, le transistor M2 est polarisé pour fonctionner dans la portion linéaire de sa caractéristique courant-tension et présente donc une faible résistance série. Ainsi, quand le transistor M2 doit absorber la partie du courant constant I non utilisé, la dissipation du dispositif 10 reste cependant faible grâce à ce fonctionnement en régime linéaire (non saturé).

En cas de brusque appel de courant par le microprocesseur 2, la tension Vout a tendance à chuter en dessous de la valeur Vref, ce qui provoque une commutation de la sortie du comparateur 14. Le circuit 13 bloque alors le transistor M2, puis rend le transistor M1 passant afin de recharger la capacité C' par le courant I.

Une caractéristique de la présente invention est que le transistor M1 est rendu passant avec un certain retard par rapport au blocage du transistor M2. Ainsi, le courant commence par passer par la diode intrinsèque D du transistor M1, ce qui impose le sens du courant dans ce transistor M1 avant qu'il soit rendu passant.

En cas de brusque chute de l'appel de courant par le microprocesseur 2, la tension Vout augmente si cette chute de courant ne peut pas être immédiatement absorbée par le dispositif 10. Une augmentation de la tension Vout provoque une commutation de la sortie du comparateur 14 afin de rendre le transistor M2 passant qui absorbe alors le courant excédentaire.

La figure 3 représente un exemple de réalisation d'une source 11 de courant I constant selon la présente invention. La source 11 est ici constituée d'un convertisseur de type alimentation à découpage commandé en courant. Ce convertisseur comporte essentiellement deux transistors MOS (ici à canal N) M3, M4 montés en série entre la borne 12 d'application de la tension d'alimentation Ve et la masse. Le point milieu de l'association en série des transistors M3 et M4 est relié à une première borne d'une inductance L dont une deuxième borne délivre le courant I. Les transistors M3 et M4 sont commandés par un circuit 17 de modulation de largeur d'impulsion, commandé en courant (CM_PWM). Un détecteur 18 de courant est intercalé entre la source du transistor M3 et le point milieu de l'association en série des transistors M3 et M4, et commande le circuit 17. Un condensateur chimique C de filtrage est placé entre la borne 16 et la masse.

Une caractéristique de ce mode de réalisation est que le transistor M3 est, comme le transistor M2 décrit précédemment, commandé de manière à fonctionner dans la portion linéaire de sa caractéristique courant-tension, de manière à minimiser la dissipation d'énergie alors que le circuit 11 produit, en permanence, un courant I correspondant au courant maximal (par exemple, l'ordre de 10 A) que la charge 2 est susceptible d'appeler. Le courant I dans l'inductance L est contrôlé par le circuit 17 à l'aide du détecteur de courant 18, par exemple, un transformateur de courant, un transistor de détection ou tout autre dispositif adapté. L'inductance L est dimensionnée de telle sorte que la valeur minimale du courant qui la traverse soit supérieure ou égale à la valeur minimale du courant appelé par la charge. Ainsi, l'ondulation de courant dans l'inductance L n'influe pas sur la tension de sortie. Le courant maximal susceptible d'être appelé par la charge 2 est majoré de l'ordre de 10%.

Tant que la tension Vout aux bornes du condensateur C' (figure 2) n'a pas atteint une valeur minimale, l'inductance L et les transistors M2 et M4 servent à faire circuler le courant I en roue libre. Quand la tension Vout souhaitée est atteinte, le transistor M2 est bloqué et le transistor M1 est mis en conduction après un léger temps mort pendant lequel le courant I de l'inductance L traverse la diode intrinsèque D du transistor M1. Puis, le courant I traverse le transistor M1 rendu passant, et vient recharger le condensateur C' jusqu'à une valeur maximale. Les valeurs minimale et maximale correspondent à la plage de variation de l'hystérésis du comparateur 14. Le courant I reste pratiquement constant pendant la charge du condensateur C' et est égal au courant maximal choisi. L'ondulation de courant dans l'inductance L croît pendant la recharge du condensateur C' dans la mesure où l'inductance L se démagnétise sous la tension de sortie pendant une durée pouvant atteindre la période complète de la fréquence de découpage du circuit 17.

On notera que le transistor M4 pourra, le cas échéant, être remplacé par une diode SCHOTTKY. L'avantage du recours à un transistor MOS est toutefois que cela conduit à un meilleur rendement.

La valeur du condensateur C' est choisie en fonction de la fréquence de charge/décharge souhaitée et du courant de sortie autorisé. A faible charge, le condensateur est pratiquement rechargé par la totalité du courant disponible dans l'inductance L. De ce fait, le condensateur C' se charge très vite tandis que sa décharge est très lente. On respecte ainsi les contraintes de stabilité en tension et de rapidité à répondre aux variations de courant appelé par la charge.

Selon l'invention, on choisit un condensateur C' céramique afin qu'il présente une résistance interne série (ESR) très faible (inférieure en pratique à environ 5 mΩ). En effet, à faible charge, le condensateur C' se charge avec le courant maximal lors de la commutation des transistors M1 et M2, le temps de recharge serait alors diminué considérablement si la résistance série est trop élevée.

On choisira de préférence des amplificateurs du circuit 13 et un comparateur 14 ayant des temps de réponse rapides afin de contrôler précisément la tension de sortie. A titre d'exemple particulier, pour une tension Vout de 2,1 volts et une précision de ±5% (±1% pour la précision de la tension de référence et ±4% pour l'hystérésis), un délai de 250 nanosecondes dans la réponse du comparateur 14 et du circuit 13 accroît la tension Vout de 68 mV avec C' = 40 µF et I = 11 A (charge faible). A charge forte, la tension Vout diminue de 68 mV. On veillera donc à réduire l'hystérésis du comparateur 14 d'une valeur équivalente afin de conserver une tension Vout dans les limites de tolérance imposées.

Un avantage de la présente invention est que la tension de sortie Vout est pratiquement indépendante des variations brusques de courant dues au microprocesseur 2. En effet, la tension Vout est comprise entre deux seuils d'hystérésis fixés.

Un autre avantage de la présente invention est qu'il n'est pas nécessaire de disposer, au sein du convertisseur, d'une boucle de réponse rapide qui rend le schéma plus complexe.

Un autre avantage de la présente invention est qu'elle permet de diminuer la taille du condensateur de sortie C' (à titre d'exemple particulier, un condensateur céramique de 40 µF suffit), voire d'utiliser les condensateurs de découplage généralement implantés avec le microprocesseur (par exemple, 40 condensateurs de 1 µF). De préférence, le circuit 11 et le dispositif 10 sont réalisés sous forme de modules séparés et le dispositif 10 est implanté le plus près possible du microprocesseur 2 de manière à utiliser ces condensateurs de découplage.

Un autre avantage de la présente invention est qu'elle augmente la fiabilité de l'alimentation du microprocesseur en supprimant le recours à des condensateurs chimiques qui présentent une faible durée de vie. De plus, la tension Vout ne subissant pas les dérives des condensateurs chimiques est alors fixée de façon précise.

Encore un autre avantage de la présente invention est qu'elle permet de placer, à proximité du microprocesseur, uniquement le module 10 de régulation qui est de taille limitée, et de déporter le module de source de courant 11 qui est plus encombrant plus loin du microprocesseur 2 sur la carte d'implantation.

On notera que, comme les circuits 10 et 11 sont indépendant l'un de l'autre et fonctionnent de façon asynchrone, d'autres sources de courant adaptées pourront être utilisées. En particulier, la source 11 pourra être constituée d'un régulateur de courant linéaire.

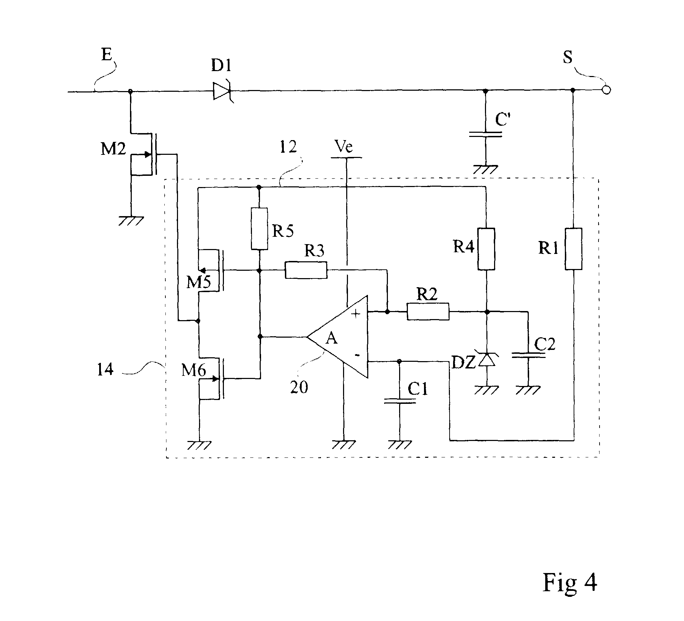

La figure 4 illustre une variante de réalisation de la présente invention dans laquelle le transistor M1 et sa diode intrinsèque D sont remplacés par une diode SCHOTTKY D1. Une telle variante permet d'éviter le recours à un circuit 13 décaleur de niveaux et de temporisation. En effet, le sens du courant étant imposé par la diode D1, il n'est plus nécessaire de retarder la mise en conduction afin de fixer le sens du courant par la diode intrinsèque D du transistor MOS. De plus, la diode D1 ne nécessite pas de signal de commande. Toutefois, le recours à un transistor plutôt qu'une diode SCHOTTKY présente l'avantage de fournir un meilleur rendement.

A la figure 4, on a représenté un mode de réalisation du comparateur 14 à hystérésis dont une sortie commande directement le transistor M2 pour lequel un décaleur de niveaux n'est pas nécessaire.

Le circuit 14 est, par exemple, réalisé à base d'un amplificateur opérationnel 20 dont une borne d'entrée inverseuse est reliée, par l'intermédiaire d'une résistance R1, à la borne S. Un condensateur C1 de faible valeur est placé entre l'entrée inverseuse de l'amplificateur 20 et la masse. La cellule R1C1 conditionne le retard de l'hystérésis du comparateur 14 et sert au filtrage. La référence de tension est fournie par une diode Zener DZ dont l'anode est connectée à la masse et dont la cathode est reliée, par l'intermédiaire d'une résistance R2, à une borne d'entrée non inverseuse de l'amplificateur 20. Un condensateur C2 de découplage est monté en parallèle sur la diode DZ. La borne d'entrée non inverseuse de l'amplificateur 20 est reliée à sa sortie par l'intermédiaire d'une résistance R3. L'amplitude en tension de l'hystérésis est fonction du rapport entre les résistances R3 et R2. L'amplificateur 20 est alimenté par la tension Ve. Une résistance R4 est connectée entre la cathode de la diode DZ et la borne 12, et une résistance R5 est placée entre la sortie de l'amplificateur et la borne 12. La sortie de l'amplificateur 20 est reliée aux grilles de deux transistors MOS M5, M6 montés en série entre la borne 12 et la masse. Le point milieu de l'association en série des transistors M5 (à canal P) et M6 (à canal N) est relié à la grille du transistor M2.

Le rôle de la résistance R5 est de permettre à la sortie de l'amplificateur 20 d'atteindre sensiblement le potentiel Ve dans le cas où l'amplificateur 20 est à étage de sortie à collecteur ouvert.

Bien entendu, la présente invention est susceptible de diverses variantes et modifications qui apparaîtront à l'homme de l'art. En particulier, la réalisation pratique du circuit 13 (figure 2) avec décalage de niveaux et temps mort pour la commande du transistor M1 est à la portée de l'homme du métier à partir des indications fonctionnelles données ci-dessus. De plus, le dimensionnement des différents constituants du dispositif selon l'invention est également à la portée de l'homme du métier.

En outre, bien que pour des raisons de clarté on n'ait pas tenu compte, dans l'exposé de la figure 4, d'une programmation de l'hystérésis et de la tension de référence à partir de la charge (borne CTRL, figure 2), on utilisera, de préférence, un comparateur à hystérésis programmable, en tension de référence et en amplitude d'hystérésis, par exemple, à partir de 4 bits délivrés par le microprocesseur. La réalisation d'un tel comparateur est à la portée de l'homme du métier.

## Revendications

1. Système de fourniture d'une tension régulée (Vout) destinée à alimenter une charge (2), caractérisé en ce qu'il comporte :
une source (11) propre à fournir un courant (I) sensiblement constant correspondant approximativement au courant maximal susceptible d'être appelé par la charge ; et
un dispositif de régulation (10) recevant, sur une borne (E) d'entrée, ledit courant constant et délivrant, sur une borne (S) de sortie, la tension régulée (Vout) d'alimentation de la charge, au moins un condensateur (C') étant connecté entre la borne de sortie et la masse, et le dispositif de régulation comportant un comparateur (14) à hystérésis recevant la tension (Vout) d'alimentation de la charge et une tension (Vref) de référence.

2. Système selon la revendication 1, caractérisé en ce que le dispositif de régulation (10) comporte au moins un premier transistor MOS (M2), connecté entre la borne (E) d'entrée et la masse, le premier transistor étant commandé par le comparateur (14) en étant polarisé dans la portion linéaire de sa caractéristique courant-tension.

3. Système selon la revendication 2, caractérisé en ce que le dispositif de régulation (10) comporte une diode SCHOTTKY (D1) reliant la borne (E) d'entrée à la borne (S) de sortie.

4. Système selon la revendication 2, caractérisé en ce que le dispositif de régulation (10) comporte un deuxième transistor MOS (M1) dont la source est reliée à la borne (E) d'entrée et dont le drain est relié à la borne (S) de sortie, ledit deuxième transistor étant commandé, à partir du comparateur à hystérésis (14), par un circuit (13) introduisant un retard à la fermeture du deuxième transistor.

5. Système selon l'une quelconque des revendications 1 à 4, caractérisé en ce que la source de courant constant (11) est constituée d'une alimentation à découpage commandée en courant, un troisième transistor MOS (M3), connecté entre la masse et une première borne d'une inductance (L) dont une deuxième borne délivre le courant constant (I), étant commandé dans la portion linéaire de sa caractéristique courant-tension.

6. Système selon l'une quelconque des revendications 1 à 4, caractérisé en ce que la source de courant constant (11) est constituée d'un régulateur de courant linéaire.

7. Système selon l'une quelconque des revendications 1 à 6, caractérisé en ce que ledit condensateur est un condensateur céramique (C').

8. Dispositif (10) de limitation de variations transitoires d'une tension (Vout) fournie par un système selon la revendication 1 à partir d'un convertisseur de puissance (11) constituant ladite source de courant, caractérisé en ce qu'il comporte :
un premier transistor MOS de puissance (M2) connecté entre la borne (E) d'entrée et la masse ;
un élément (D1, M1) de conduction unidirectionnelle connecté entre la borne (E) d'entrée et la borne (S) de sortie ; et
des moyens (14) de détection de la tension régulée délivrée (Vout) et de commande du premier transistor (M2) dans la portion linéaire de sa caractéristique courant-tension.

9. Dispositif selon la revendication 8, caractérisé en ce que ledit élément de conduction unidirectionnelle est constitué d'un deuxième transistor MOS (M1) dont la source est connectée à la borne (E) d'entrée et dont le drain est connecté à la borne (S) de sortie.
